# EUROPEAN PATENT APPLICATION

(11) **EP 0 889 413 A2**
(43) Date of publication of application: **07.01.1999**
(21) Application number: 98305136.8
(22) Date of filing: 29.06.1998
(51) Int. Cl.: G06F 13/38

(54) **System and method for interconnecting personal computer in computer workstation**

(30) Priority: 30.06.1997 US 885495
(71) Applicant: Sun Microsystems, Inc., Palo Alto, California 94303-4900 (US)
(72) Inventor: NcDonald, John, Harvard, Massachusetts 01451 (US)
(74) Representative: Harris, Ian Richard

(57) **Abstract**

A computer system includes a workstation portion and a personal computer (PC) portion interconnected by a PC/workstation interface. The interface performs a number of services in connection with the workstation portion and the PC portion, including transfer of operator input information received by the workstation portion from and operator to the PC portion, storage of video information for the PC portion and transfer of selected stored video information to the workstation portion for display, and control of access to the PC portion's mass storage devices by both the PC portion and the workstation portion. The interface connects to the PC portion's PCI bus and claims transactions which identify particular addresses in the PCI bus' address space. The interface includes a lookup table which identifies the particular addresses in the address space which it is to claim, to facilitate rapid claiming by the interface. The interface operates in response to commands provided by both the PC portion and the workstation portion in a command list. The command list includes two FIFOs, one for commands to be executed with normal priority, and the other for commands to be executed with enhanced priority. To ensure that ones of the commands that need to be processed in a particular order are executed in the required order, each command is associated with an order flag that controls loading of such commands in the command list.

## Description

### FIELD OF THE INVENTION

The invention relates generally to the field of digital computer systems, and more particularly to systems and methods for interconnecting personal computers in computer workstations, so that computer programs written for and designed for execution by the personal computers can be executed on computer workstations. In one particular embodiment, the invention provides a system and method whereby computer programs written for and designed for execution by personal computers which incorporate microprocessors from Intel Corporation and which typically make use of Microsoft Windows™ operating systems, can be executed directly on a computer workstation available from Sun Microsystems, Inc., which incorporate SPARC microprocessors and make use of Unix-like operating systems, without the necessity of emulating such computer programs on the computer workstation. In that arrangement, the personal computer receives its operator keyboard, mouse or other input from the computer workstation and provides output information to the computer workstation for display on its (that is, the computer workstation's) video display or output to its (that is, the computer workstation's) printer, network connections or the like.

### BACKGROUND OF THE INVENTION

Digital computers process a variety of diverse types of programs, with each program including a series of instructions that enable the computer to perform specific operations in connection with specific elements of data. A variety of types of processors are available for use in digital computer systems, with each type of processor being constructed in accordance with an architecture which describes, inter alia, the set of instructions that a processor constructed in accordance with the architecture is expected to execute, the format(s) of the various instructions, the types and formats of data which may be processed, definitions for various registers that may be used during instruction processing, how information in the computer's memory will be accessed and how a processor constructed in accordance with the architecture is to handle exception conditions which may be detected during instruction processing.

A number of types of digital computers have been developed, from mainframe computers at the high end, through mini-computers and workstations to personal computers at the low end. Generally, a mainframe computer and a mini-computer will be used by a number of users, allowing for centralized processing and maintenance of data and programs. Workstations and personal computers, on the other hand, are generally used by individuals or, at most, small groups of users. To facilitate program and data sharing among personal computers and workstations, networks have been developed over which one personal computer or workstation can make use of data and programs on another "remote" device, in general by causing the data and programs to be "downloaded," that is, transferred to it for processing.

With the increasing popularity of personal computers, particularly those based on the x86 microprocessor architecture defined by the Intel Corporation, which currently includes its 8086, 8088, 80286, 80386, 80486 and "Pentium" lines of microprocessors, programs of increasing power and sophistication have been written for and designed to be executed personal computers. It is often advantageous to allow such programs to be executed by the other types of digital computer systems, that is, by the workstations, mini-computers and mainframe computers. Typically, however, the processors of the higher classes of digital computer systems are not of the x86 architecture and thus will not directly execute programs written and designed for personal computers. Several arrangements have been devised to enable other types of digital computer systems to execute programs that have been written and designed for personal computers by emulation. Generally in emulation, each instruction or series of instructions in the x86 instruction set used by the personal computer being emulated is converted into instructions in the native instruction set of the emulating digital computer system. However, one problem with this approach is that the conversion generally is a lengthy process, so that programs written for and designed for execution by a personal computer may run faster on the personal computer than on the emulating digital computer system.

### SUMMARY OF THE INVENTION

Particular and preferred aspects of the invention are set out in the accompanying independent and dependent claims. Features of the dependent claims may be combined with those of the independent claims as appropriate and in combinations other than those explicitly set out in the claims.

The invention provides a new and improved system and method for facilitating the interconnection of elements personal computers into computer workstations to enable the workstations to execute computer programs written and designed for execution directly by computer workstations rather than relying on emulation.

In brief summary, the invention is directed to a computer system including a workstation portion and a personal computer (PC) portion interconnected by a PC/workstation interface. The interface performs a number of services in connection with the workstation portion and the PC portion, including transfer of operator input information received by the workstation portion from and operator to the PC portion, storage of video information for the PC portion and transfer of selected stored video information to the workstation portion for display, and control of access to the PC portion's mass storage devices by both the PC portion and the workstation portion. The interface connects to the PC portion's PCI bus and claims transactions which identify particular addresses in the PCI bus' address space. In accordance with one aspect of the invention, the interface includes a lookup table which identifies the particular addresses in the address space which it is to claim, to facilitate rapid determination by the interface as to whether it is to claim a transaction.

The interface operates in response to commands provided by both the PC portion and the workstation portion in a command list. In accordance with a second aspect of the invention, the command list includes two FIFOs, one for commands to be executed with normal priority, and the other for commands to be executed with enhanced priority, with the interface executing commands from the "enhanced priority" FIFO prior to executing commands from the "normal priority" FIFO, To ensure that ones of the commands that need to be processed in a particular order are executed in the required order, each command is associated with an order flag that controls loading of such commands in the command list, Thus, if a command is received whose order flag indicates that it is to be executed in order, the command list is inhibited with loading additional commands whose order flags also indicate that they are to be executed in order, until the one command has been executed.

This guarantees that commands whose order flags are set will be executed in order in which they are received, regardless of the FIFO in which they are loaded.

### BRIEF DESCRIPTION OF THE DRAWINGS

Exemplary embodiments of the invention are described hereinafter, by way of example only, with reference to the accompanying drawings, in which:
FIG. 1 depicts an illustrative computer system incorporating a personal computer/workstation interface system for interconnecting a personal computer and a computer workstation, constructed in accordance with the invention
FIG. 2 is a functional block diagram of the computer system depicted in FIG. 1;
FIG. 3 is a functional block diagram of the personal computer /workstation interface depicted in FIG. 2; and
FIG. 4 is a functional schematic diagram of a command list used to buffer commands for execution by the personal computer/workstation interface.

### DETAILED DESCRIPTION OF AN ILLUSTRATIVE EMBODIMENT

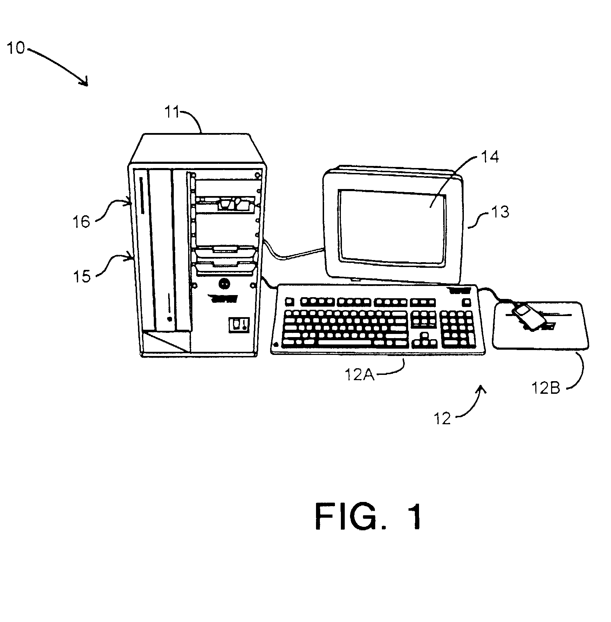

FIG. 1 depicts an illustrative computer system 10 incorporating an interconnection system for interconnecting a personal computer in a computer workstation, constructed in accordance with the invention. With reference to FIG. 1, the computer system 10 in one embodiment includes a processor module 11 and operator interface elements comprising operator input components such as a keyboard 12A and/or a mouse 12B (generally identified as operator input element(s) 12) and an operator output element such as a video display device 13. The illustrative computer system 10 is of the conventional stored-program computer architecture.

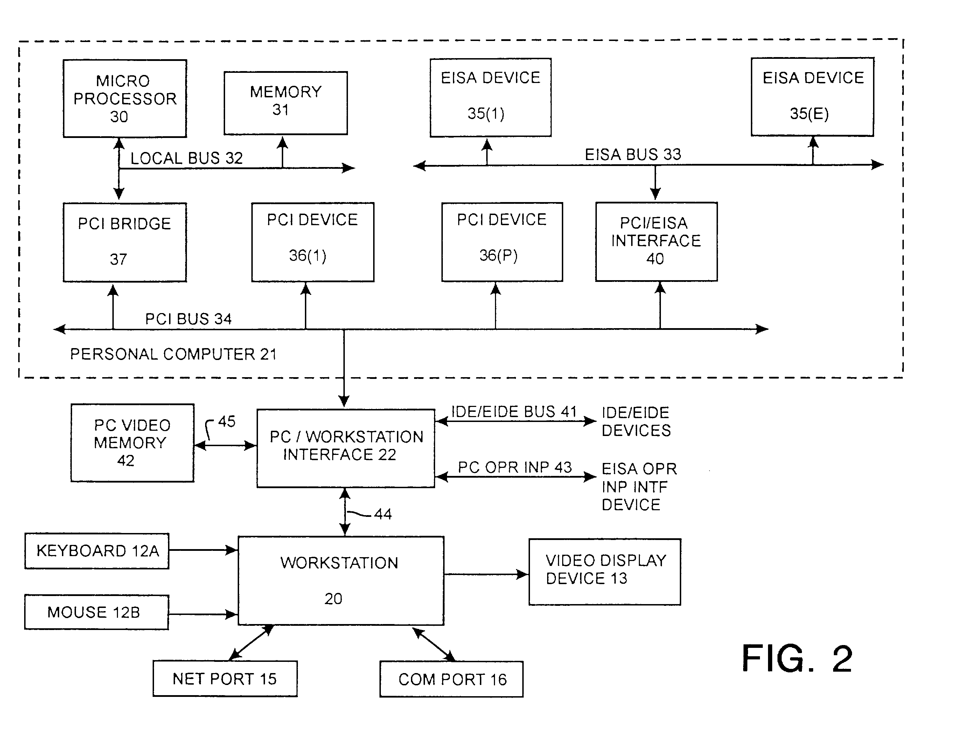

The processor module 11 will be described in detail below in connection with FIGS. 2 through 4. Generally, the processor module 11 includes, for example, processor, memory and mass storage devices such as disk and/or tape storage elements (not separately shown) which perform processing and storage operations in connection with digital data provided thereto. The mass storage subsystems may include such devices as disk or tape subsystems, optical disk storage devices and CD-ROM devices in which information may be stored and/or from which information may be retrieved. One or more of the mass storage subsystems may utilize removable storage media which may be removed and installed by an operator, which may allow the operator to load programs and data into the digital computer system 10 and obtain processed data therefrom. Under control of control information provided thereto by the processor, information stored in the mass storage subsystems may be transferred to the memory for storage. After the information is stored in the memory, the processor may retrieve it from the memory for processing. After the processed data is generated, the processor may also enable the mass storage subsystems to retrieve the processed data from the memory for relatively long-term storage.

The operator input element(s) 12 are provided to permit an operator to input information for processing. The video display device 13 is provided to display output information generated by the processor module 11 on a screen 14 to the operator, including data that the operator may input for processing, information that the operator may input to control processing, as well as information generated during processing. The processor module 11 generates information for display by the video display device 13 using a so-called "graphical user interface" ("GUI"), in which information for various applications programs is displayed using various "windows." Although the computer system 10 is shown as comprising particular components, such as the keyboard 12A and mouse 12B for receiving input information from an operator, and a video display device 13 for displaying output information to the operator, it will be appreciated that the computer system 10 may include a variety of components in addition to or instead of those depicted in FIG. 1.

In addition, the processor module 11 includes one or more network ports, generally identified by reference numeral 15, which are connected to communication links which connect the computer system 10 in a computer network, and to one or more communications ports, identified by reference numeral 16, which connect the computer system 10 to other computer systems (not shown) over, for example, the public telephony system. The network ports enable the computer system 10 to transmit information to, and receive information from, other computer systems and other devices in the network. In a typical network organized according to, for example, the client-server paradigm, certain computer systems in the network are designated as servers, which store data and programs (generally, "information") for processing by the other, client computer systems, thereby to enable the client computer systems to conveniently share the information. A client computer system which needs access to information maintained by a particular server will enable the server to download the information to it over the network. After processing the data, the client computer system may also return the processed data to the server for storage. In addition to computer systems (including the above-described servers and clients), a network may also include, for example, printers and facsimile devices, digital audio or video storage and distribution devices, and the like, which may be shared among the various computer systems connected in the network. The communication links interconnecting the computer systems in the network 10 may, as is conventional, comprise any convenient information-carrying medium, including wires, optical fibers or other media for carrying signals among the computer systems. Computer systems transfer information over the network by means of messages transferred over the communication links, with each message including information and an identifier identifying the device to receive the message.

The communications ports 16 also enable the computer system 10 to connect to another computer system or other device over a communications medium, which may also be a wire, optical fiber or other signal-carrying medium, or a communications system such as the public telephony system. A communications port 16 may connect directly to a communications port of another computer system. Alternatively, a port 65 may be connected to a modem (modulator/demodulator) which converts digital signals provided by the computer system 10 into audio signals for transmission over the public telephony system for transmission to another computer system, and further converts audio signals received from the public telephony system into digital signals to be provided to the computer system 10. Communications ports 15 are used to facilitate transfer of files between the computer system 10 and another computer system (that is, the other computer system connected to the communications medium over which the computer system 10 is communicating). In addition, communications ports 15 are used to enable the computer system 10 to operate as a terminal on the other computer system, that is, the computer system 10 effectively operates as the operator input and display devices for a program that is being executed on the other computer system. That is, while operating as a terminal, the computer system 10 effectively transfers the operator's inputs through the keyboard 12A, mouse 12B, or other operator input element, to the other computer system through their respective communications ports, and the receiving computer system will recognize and use the information it receives through its communications port as an operator's input, just as it would operator input that it might receive through its own keyboard or mouse. Similarly, any operator output, such as a visual display output that it might generate for display on its own video display device, will be redirected through its communications port for transfer to the computer system 10, which will display the video output on its video display device. During a session involving communications through respective communications ports, that is, while two computer systems are transferring files through their communications ports or while one computer system is operating as a terminal on another computer system, the computer systems are effectively directly connected to each other and to no other computer system, and so they need only transfer information therebetween, without any necessity of transmitting identifiers or the like to identify the intended recipient of the information.

An embodiment of the invention provides a PC/workstation interconnection subsystem and method for interconnecting components of a personal computer ("PC") into a computer workstation. The combination of the computer workstation, PC and the PC/workstation subsystem forms the digital computer system 10 described above in connection with FIG. 1, and in particular forms portions of the processor module 11 described above in connection with FIG. 1. The PC/workstation interconnection subsystem allows the digital computer system 10 to include, in addition to processing, memory, mass storage and input/output components normally comprising a computer workstation, also processing and other components comprising a PC. This permits the digital computer system 10 to process, in addition to programs written for and designed for execution by the computer workstation, also programs written for and designed for execution by a PC. Typically, a PC makes use of one or more microprocessors from the Intel Corporation x86 family of microprocessors, which currently includes its 8086, 8088, 80286, 80386, 80486 and "Pentium™" lines of microprocessors, or an microprocessor constructed in accordance with the x86 architecture, and runs an operating system such as MS-DOS or Microsoft Windows™ from Microsoft Corporation. On the other hand, a computer workstation, in one embodiment, comprises a microprocessor constructed in accordance with the SPARC architecture, such as the SPARC Version 9 architecture described in the SPARC International, Inc [David L. Weaver and Tom Germond (eds)], The SPARC Architecture Manual Version 9 (Prentice-Hall, 1994), and runs either Unix or a Unix-like operating system. In the digital computer system 10 described herein, the PC programs are executed directly by the system 10, without any necessity of emulation of the x86 microprocessor by the SPARC microprocessor, which can result in faster processing of the PC programs. As indicated above, the video display device 13 provides a GUI operator interface, in which operators interact with programs through windows, and in that embodiment the PC programs will be executed in one or more windows on the video display device 13.

FIG. 2 depicts a functional block diagram of the computer system 10 shown in FIG. 1, particularly elements comprising the processor module 11. With reference to FIG. 2, the processor module includes the workstation portion 20 and the PC portion 21 interconnected by the PC/workstation interconnection subsystem 22. As is conventional, the workstation portion 20 includes processor, memory and storage elements. In addition, the workstation 20 will generally include interfaces to the operator input element(s) 12, including keyboard 12A and mouse 12B, and to the video display device 13, and may include the network and communication interfaces 15 and 16 as described above in connection with FIG. 1. As indicated above, in one embodiment the processor included in the workstation portion comprises a microprocessor constructed in accordance with the SPARC architecture.

The PC portion 21 includes a number of elements which typically would comprise a PC, including a microprocessor 30 and memory 31 interconnected by a local bus 32. The PC portion 21 also includes two additional buses, namely, an EISA bus 33 and a PCI bus 34 which interconnect various devices which are included in the PC portion 21 in a conventional manner. The devices connected to the EISA bus 33 are identified in FIG. 2 as EISA devices 35(1) through 35(E) (generally identified by reference numeral 35(e)) and the devices connected to the PCI bus 34 are identified as PCI devices 36(1) through 36(P) (generally identified by reference numeral 36(p)) A number of types of devices may be connected to the EISA bus 33 and PCI bus 34, respectively, including controller devices for mass storage subsystems, interfaces for video display devices and operator input devices, communication devices such as modems or network interfaces and the like. The PC portion 21 includes a PCI bridge 37 for interconnecting the microprocessor's local bus 32 and PCI bus 34, and a PCI/EISA interface 40 for interconnecting the PCI bus 34 and the EISA bus 33.

As is conventional, the PCI bridge 37 receives transfers initiated over the local bus 32 by, for example, the microprocessor 30, for devices connected to the PCI bus 34 and couples them onto the PCI bus 34. In addition, the PCI bridge receives transfers initiated by devices connected to the PCI bus 34, including the PCI/EISA interface 40, for devices on the local bus 32 and couples them onto the local bus 32. Similarly, the PCI/EISA interface 40 receives transfers initiated over the PCI bus 34 by, for example, the PCI bridge 37 or other PCI devices 36(p) for devices connected to the PCI bus 34 and couples them onto the EISA bus 33. In addition, the PCI/EISA interface 40 receives transfers initiated by devices connected to the EISA bus 33 for devices on the PCI bus 34, including the PCI bridge 37, and couples them onto the PCI bus 34. Accordingly, it will be appreciated that a device, such as microprocessor 30, connected to the local bus 32, can initiate a transfer to an EISA device 35(E) by initiating a transfer over the local bus, which the PCI bridge 37 couples onto the PCI bus 34. The PCI/EISA interface 40, in turn, will receive the transfer and initiate a transfer over the EISA bus 33 to the appropriate destination device. Similarly, an EISA device 35(e), connected to EISA bus 33, can initiate a transfer to a device, such as microprocessor 30, connected to local bus 32, by initiating a transfer over the EISA bus 33, which the PCI/EISA interface 40 couples onto the PCI bus 34. The PCI bridge 37, in turn, will receive the transfer and initiate a transfer over the local bus 33 to the appropriate destination device.

As noted above, the invention provides a system and method for interconnecting a PC, represented by PC portion 21, and a workstation, represented by workstation portion 20, to form the unitary digital computer system 10, enabling the digital computer system 10 to process computer programs written and designed for execution both by the workstation portion 20 and the PC portion 21. The workstation portion 20 includes elements including, for example, mass storage subsystems for storing data and programs, operator input devices 12 and display and other output devices, which are used to provide data; programs and operator input information for use by the PC portion 21, and receiving processed information generated by the PC portion 21. The invention makes use of the PC/workstation interface 22 to integrate the PC portion 21 into the digital computer system 10, in particular to couple information from the workstation portion 20 to the PC portion 21 for processing and to couple processed information from the PC portion 21 to the workstation portion for storage, display, printing, or further transfer over a communication link or network connection through respective ports 15 and 16 (FIG. 1).

The PC/workstation interface 22 is connected to the PCI bus 34 and operates as a PCI device to receive transfers initiated by other devices in the PC portion 21 for transfer to the above-described elements of the workstation portion 20, and to receive transfers initiated by elements of the workstation portion 20 for transfer to the devices of the PC portion 21. The PC/workstation interface 22 in one embodiment also provides a connection to other devices, such as one or more mass storage subsystem devices over an IDE or EIDE bus (generally referenced herein "IDE/EIDE bus") 41. The PC/workstation 22 can receive and process requests from both the PC portion 21 and the workstation portion 20 to enable data to be stored in and retrieved from mass storage subsystem devices connected to the IDE/EIDE bus 41. Generally, transfers to or from a mass storage subsystem device connected to the IDE/EIDE bus 41 are performed in a DMA ("direct memory access") manner.

In a DMA access, the PC/workstation interface 22 receives a storage or retrieval command from the microprocessor 30 of the PC portion 21 or from the workstation portion 20 and executes it without further involvement of the microprocessor 30 or the microprocessor of the workstation portion 20 until the operation has been completed. In particular, in executing a storage command from the microprocessor 30, the PCI/workstation interface 22 will initiate a retrieval operation over the PCI bus 34 to, in turn, enable the PCI bridge 37 to retrieve data from the memory 31 over local bus 32, and transfer the retrieved data over the PCI bus 34 to the PCI/workstation interface 22, The PCI/workstation Interface 22, in turn, will transfer the data from the PCI bus 34 to the mass storage subsystem device for storage over the IDE/EIDE bus 41. On the other hand, in executing a retrieval command from the microprocessor 30 of the PCI portion 21, after receiving the retrieval command the PC/workstation interface 22 will retrieve data from the mass storage subsystem device connected to the IDE/EIDE bus 41 and transfer it over the PCI bus 34, and through the PCI bridge 37 to the memory 31 for storage therein. After the storage or retrieval operation has been completed, whether successfully or unsuccessfully, the PC/workstation interface 22 will notify the microprocessor 30 that the operation has been completed, and if the operation was unsuccessful may provide an indication of the cause of the error.

Similarly, in executing a storage command from the workstation 20, the PCI/workstation interface 22 will initiate a retrieval operation over the PCI bus 34 to retrieve data from the workstation's memory (not shown), and transfer the retrieved data over the workstations' system bus 44 to the PCI/workstation interface 22. The PCI/workstation interface 22, in turn, will transfer the data from the system bus 44 to the mass storage subsystem device for storage over the IDE/EIDE bus 41. On the other hand, in executing a retrieval command from the workstation 20, the PC/workstation interface 22 will retrieve data from the mass storage subsystem device connected to the IDE/EIDE bus 41 and transfer it over the workstation's system bus 44 for storage in the workstation's memory. After the storage or retrieval operation has been completed, whether successfully or unsuccessfully, the PC/workstation interface 22 will notify the microprocessor 30 that the operation has been completed, and if the operation was unsuccessful may provide an indication of the cause of the error.

In addition, the PC/workstation interface 22 is connected to a PC video memory 42. The PC video memory 42 stores video display information generated by the PC portion 21 that would normally be displayed on a video display device connected to the PC portion 21. As described above, the video output generated by the PC portion 21 is displayed by the digital computer system's video display device 13 which, in turn, is controlled by the workstation portion 20. The PC portion 21 provides video information to the PC/workstation interface 22, which stores the video information in the PC video memory 42. The PC/workstation interface 20 is also connected to a system bus 44 of the workstation portion 20, which in one embodiment comprises a PCI bus, and on request from the workstation portion 20, the PC/workstation interface 22 provides the video information stored in the PC video memory 42 to the workstation portion 20 for display by the digital computer system's video display device 13.

In one embodiment, the PC portion 21 expects that operator input from, for example, a keyboard or mouse device, to be provided through an EISA device 35(e). In that embodiment, the workstation portion 20 receives operator input information from the digital computer system's operator input device(s) 12. When the operator input information is to be used by the PC portion 21, which can occur, for example, when the PC portion's window on the digital computer system's video display device is the active window, the workstation portion 20 will provide the operator input information to the PC/workstation interface 22. The PC/workstation interface 22 further includes one or more connections, generally identified as PC operator input bus 43, connected to appropriate EISA devices 35(e) for providing the operator input information to the particular EISA devices 35(e) for use by the PC portion 21.

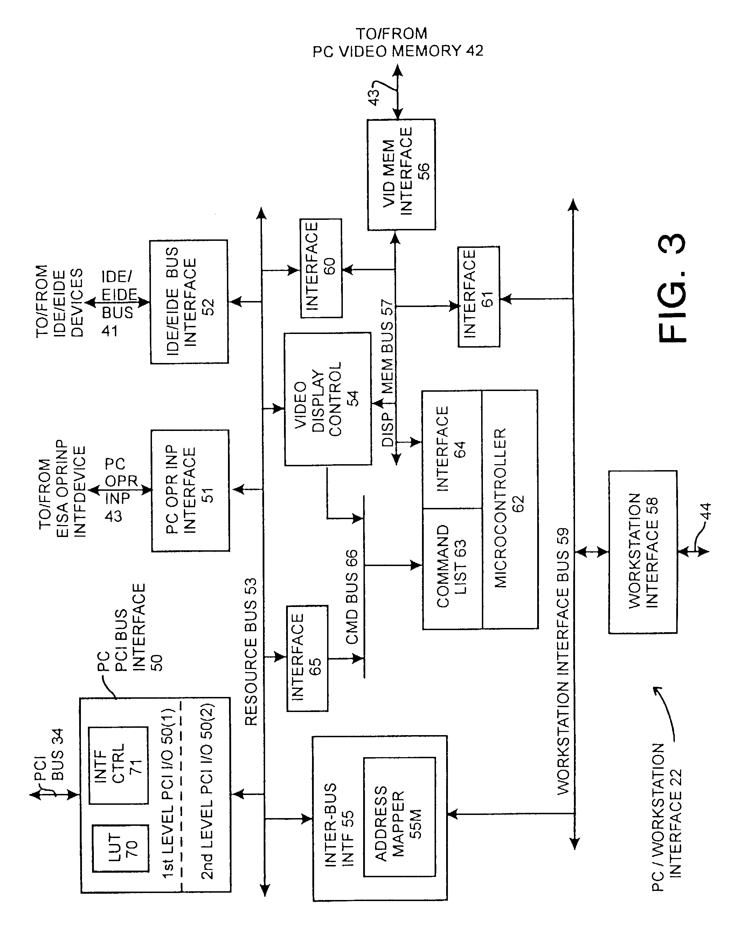

FIG. 3 depicts a detailed functional block diagram of the PC/workstation interface 22 constructed in accordance with the invention. With reference to FIG. 3, the PC/workstation interface 22 includes a number of elements, including a PC PCI bus interface 50 and a PC operator input interface 51 for connection to elements of the PC portion 21. In particular, the PC PCI bus interface 50 is connected to the PCI bus 34 and receives, as a PCI bus slave device, and initiates, as a PCI bus master device, information transfers thereover. In addition, the PCI/workstation interface 22 includes a workstation interface 58 which connects to the workstation's system bus 44. As noted above, in one embodiment, the workstation's system 44 is a PCI bus, and, in that connection, workstation interface 58 receives, as a PCI bus slave device, and initiates, as a PCI bus master device, information transfers thereover.

The PC PCI bus interface 50 is further connected to a resource bus 53 internal to the PC/workstation interface 22 to facilitate transfer of information to or from other components of the PC/workstation interface 22, as will be described below, In addition, the workstation interface 58 is further connected to a workstation interface bus 59 internal to the PC/workstation interface 22 to facilitate transfer of information to or from other components to the PC/workstation interface 22, as will be described below. The resource bus 53 is connected to the workstation interface bus 59 through an inter-bus interface 55. The inter-bus interface 55 selectively enables transfers initiated by devices connected to the resource bus 53 to be coupled onto the workstation interface bus 59 for transfer to components of the workstation portion 20 through the workstation interface 58. Similarly, the inter-bus interface 55 selectively enables transfers initiated by devices connected to the workstation's system bus 44, which the workstation interface 58 has coupled onto the workstation interface bus 59, to be coupled onto resource bus 53. The inter-bus interface 54 includes an address mapper 55 which maps addresses between the addresses on the workstation interface bus 59 and the addresses on the resource bus 53 for transfers that are to be coupled from one bus 59, 53 onto the other bus 53, 59.

The PC/workstation interface 22 operates under control of a microcontroller 62, which processes commands provided thereto by both the workstation portion 20 and the PC portion 21. Generally, the commands enable the PC/workstation portion 22 to, for example,
(i) control the provision of operator input information to the PC portion 21 representative of input information provided by the operator through the operator input devices 12A and 12B of the workstation portion 20;
(ii) control the provision of video display information, representative of display information received from the PC portion 20, to the workstation for display on its video display device, and additionally emulate a video display subsystem as would normally be included in a PC; and
(iii) control mass storage subsystem device(s) connected to the IDE/EIDE bus 41 to retrieve data therefrom for provision to the workstation portion 20 or PC portion 21, and to store data as received from the workstation portion 20 or PC portion 21 therein.

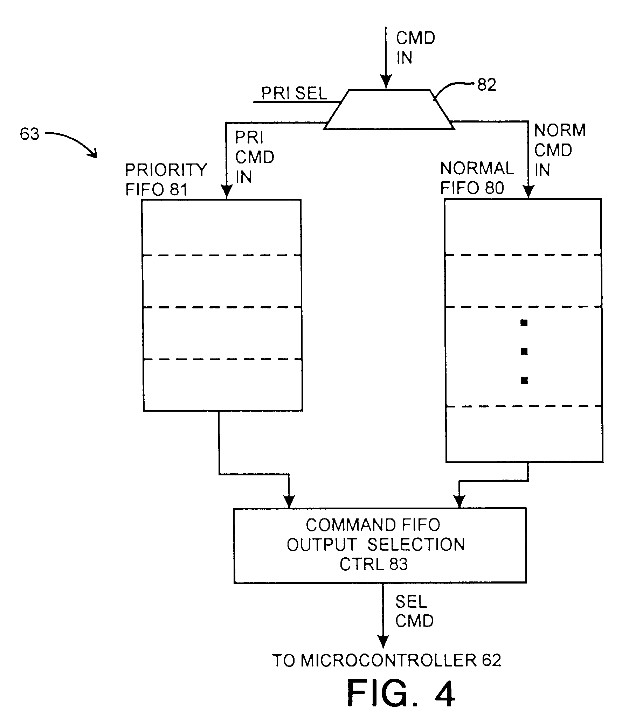

To facilitate control the provision of operator input information to the PC portion 21 representative of input information provided by the operator through the operator input devices 12A and 12B of the workstation portion 20 (item (i) above), PC operator input interface 51 is connected to the appropriate EISA device 35(e) in the PC portion 21 to provide the operator input information thereto. In addition, the microcontroller 62 emulates an operator input device controller, such as a keyboard controller, which is normally provided on a personal computer, to process commands provided thereto by the PC portion 21. To provide operator input information to the PC portion 21 in response to operator inputs provided through the operator input devices 12A and 12B, the workstation portion 20 provides a command therefor, which the PC/workstation interface 22 loads onto a command list 63 for execution by the microcontroller 62. Details of the command list 63 used in one embodiment of the invention will be described below in connection with FIG. 4. As noted above, the PC/workstation will generate such a command representative of operator input though the operator input devices 12A and 12B when, for example, the active window on the video display device is associated with a program being executed by the PC portion 21. In transferring the command to the command list 63, the workstation portion 20 transfers the command over its system bus 44 to the workstation interface 58, which, in turn, transfers the operator information to the inter-bus interface 55 over workstation interface bus 59. The inter-bus interface 55, in turn, transfers the command over the resource bus 53, through an interface device 65, and over a command bus 66, command list.

Continuing with item (i) above, when the microcontroller 62 processes the command to provide operator input information to the PC portion 21, it enables the PC operator input interface 51 to transfer the operator input information to be provided to the PC portion 21 to the PC operator input interface 51, which, in turn, couples the operator input information over PC operator input bus 43 to the appropriate EISA operator input interface device as described above in connection with FIG. 2. In that operation, the microcontroller 62 will enable suitable information to be coupled onto a display memory bus 57 through an interface 64, which information an interface 60 will couple onto the resource bus 53. The information is received by the PC operator input interface 51, which is enabled by the information to provide operator input information to the appropriate EISA device.

Further continuing with item (i) above, the microcontroller 62 also emulates an operator input device controller, such as a keyboard controller, which is normally provided on a personal computer, to process commands provided thereto by the PC portion 21. Thus, the PC portion 21, in particular the microprocessor 30 (FIG, 2), can generate keyboard controller commands which would otherwise be used to control a keyboard controller, which are provided to the microcontroller 62 for execution. In providing the commands to the microcontroller 62, the commands are transferred by the PC portion 21 so as to be received by the PC PCI bus interface 50, which, in turn, couples them onto the resource bus 53. The interface 65, in turn, loads the commands onto the command list 63 over the command bus 66.

To facilitate the provision of video display information, representative of display information received from the PC portion 20, to the workstation for display on its video display device, and emulation of video display subsystem as would normally be included in a PC (item (ii) above), the PC/workstation interface 22 is provided with a video display control 54 and video memory interface 56, as well as the PC video memory 42 described above in connection with FIG. 2. The PC video memory 42 operates as the video memory for the PC portion 21, storing video information generated by the PC portion 21 which would normally be displayed by a PC video display device (not shown), and the video memory interface operates as a memory interface for the PC video memory 42. The video display control 54 operates as a VGA/SVGA controller for the PC portion 21, and in that operation it receives video display commands and information through the PC PCI bus interface 50 and over resource bus 53, and provides the commands to the command list 63 over the command bus 66 and the video information over the display memory bus 57 to the video memory interface 56 for storage in the PC video memory 42.

Further in connection with item (ii) above, the PC/workstation interface 22 further retrieves selected video information from the PC video memory 42 for provision to the workstation portion 20 for display on its video display device. To facilitate that, the workstation portion 20 provides information to the PC/workstation interface 22 as to the location in its (that is, the workstation portion's) video memory (not shown) in which the information is to be stored, effectively controlling the location on the screen of the video display device 13 at which the window for the PC portion is to be displayed. In addition, the workstation portion 20 provides "clip list" information to the PC/workstation interface 22 as to portions, if any, of the window for the PC portion have been obscured by, for example, other windows displayed on the video display device, the video information for which will not be provided by the PC/workstation interface 22. The workstation portion 20 stores the location and clip list information in the registers (not shown) which are maintained by the microcontroller 62 For the video display commands provided by the video display control 54 indicating an update of the video display information stored in the PC video memory 42, the microcontroller 62 enables the information for the non-obscured portions of the window for the PC portion 21 to be retrieved by the video memory interface 56 to be transferred through the interface 61 and workstation interface 58 to the workstation portion 20 for storage in the video memory for the workstation portion 20 for display on the video display device 13.

To facilitate control of mass storage subsystem device(s) connected to the IDE/EIDE bus 41 to retrieve data therefrom for provision to the workstation portion 20 or PC portion 21, and to store data as received from the workstation portion 20 or PC portion 21 therein (item (iii) above), the PC/workstation interface 22 further includes an IDE/EIDE bus interface 52 for interfacing to the IDE/EIDE devices over the IDE/EIDE bus 41 as described above in connection with FIG. 2. The IDE/EIDE bus interface 52 may comprise conventional interface circuitry for interfacing to IDE/EIDE devices over the bus 41. Typical IDE/EIDE devices which may be connected to the IDE/EIDE bus 41 include mass storage devices for storing information on disk-based storage media, and in that connection the PC/workstation interface 22 will operate as a disk controller for the disk storage devices. As a disk controller, the PC/workstation interface 22 will control storage of data on and retrieval of data from the disk storage devices connected thereto. If other types of devices are attached to the IDE/EIDE bus 41, the PC/workstation interface 22 can also operate as controllers to control their operations in a similar manner.

Operating as disk controller for IDE/EIDE devices connected to the IDE/EIDE bus 41, the PC/workstation interface 22 will receive commands from the PC portion 21 and the workstation portion 20 to enable the PC/workstation interface 22 to, for example, store data received from the respective workstation portion 20 or PC portion 21 in the disk storage devices, and retrieve data from the disk storage devices for transfer to respective memories of the workstation portion 20 or PC portion 21. The commands will be provided the respective workstation portion 20 and PC portion 21 and loaded into the command list 63 in a manner corresponding to that described above. If other IDE/EIDE devices are connected to the IDE/EIDE bus 41, the PC workstation interface 22 may also receive commands for controlling such devices from the PC portion 21 and the workstation portion 20. Commands from the PC portion 21 will be received over the PCI bus 34 through the PC PCI bus interface 50 described above, and commands from the workstation portion 20 will be received over the system bus 44 through the workstation interface 58.

As described above, the PC PCI bus interface 50 connects to the PC's PCI bus 34 and the resource bus 53 and enables transfers initiated over the PCI bus to be received by the PC/workstation interface 50. Transfers over the PCI bus 34 are generally conventional, and are described in, for example, T. Shanley and D. Anderson, PCI System Architecture, (Mind Share, Inc., 1993) (hereinafter "the PCI System Architecture manual"). Generally, transfers over the PCI bus 34 operate in a series phases, including an address/command transfer phase and a data transfer phase. During the address/command phase, one device connected to the PCI bus, operating as a "master" device, transmits an address and a transfer command over the bus. The command identifies one of a number of types of transfers which may be performed over the PCI bus, and the address identifies the particular device which is to engage, with the master, in the transfer as a "slave" device. A number of types of transfers may be performed over the PCI bus 34, including, for example, a write transfer in which the master is transferring data to the slave, and a read transfer in which the slave is to provide data to the master. The address provided by the master with the command identifies the particular device which is to operate as the slave device, and in addition may identify a particular register or other storage locations in the slave device in which data is to be stored during a write transfer, or from which data is to be retrieved and provided to the master during a read transfer.

After a master has transmitted the address and command during the address/transfer phase, the device identified by the address as the slave device will "claim" the transfer by transmitting an appropriate signal over the PCI bus 34, which signal is received by the master device as well as other devices connected to the PCI bus 34. In one embodiment, described in the PCI System Architecture manual, the signal transmitted by the slave device is identified as a DEV SEL (device select) signal (not separately shown). Thereafter, if the transfer is a write transfer, the master can transfer the data to be transferred over the PCI bus 34 during the data transfer phase, and the slave can receive it (that is, the data) for storage in the particular register or other storage location(s) identified by the address provided during the address phase. On the other hand, if the transfer is a read transfer, during the data transfer phase the slave will transfer the data from the register or other storage location(s) identified by the address provided during the address phase to the master over the PCI bus 34.

Several problems can arise during a transfer over the PCI bus 34. If, for example, during the address/command phase of the transfer the device receiving the command and address determines that it is the addressed device, but it is currently unable to perform the transfer, it can provide a "retry" notification over the PCI bus 34 to notify the master that it (that is, the master) should initiate the transfer later. On the other hand, if, for example, during a read transfer the slave determines during the data transfer phase that it will not be able to provide the requested data within a predetermined time-out period, it can notify the master to abort the transfer and re-initiate the transfer later. This will ensure that the master and slave do not tie up the PCI bus 34 for an excessive amount of time without actually engaging in the required transfer.

As noted above, during the address/command phase, devices connected to the PCI bus 34 will determine whether the address indicates that they are to engage in the transfer as a slave device. Generally, this address decode operation is performed in two modes. In a positive decoding mode, a device connected to the PCI bus 34 will examine the address provided during the address/command phase and determine whether it (that is, the address) specifically identifies it. If a device determines that the address identifies it, it will claim the transfer and become the slave device for the transfer as described above.

On the other hand, in a subtractive decoding mode, a device connected to the PCI bus 34 will determine whether any other device has claimed a transfer within a predetermined "claim" time period, and if not it will claim the transfer. A device operating in the subtractive decoding mode can determine whether another device has claimed a transfer by determining whether another device has transmitted the DEV SEL device select signal over the PCI bus 34 withing a predetermined claim time-out period. If no other device claims the transfer withing the predetermined claim time-out period, a device operating in the subtractive decoding mode can claim the transfer by transmitting the DEV SEL device select signal over the PCI bus 34, which serves to notify the master device that the transfer has been claimed. As described at, for example, page 309 of the PCI System Architecture manual, the PCI/EISA interface 40 operates in the subtractive decoding mode for at least a portion of the address space defined by the addresses that can be transmitted over PCI bus 34 during the address/command phase of a transfer.

As described above, the PC/workstation interface 22 operates as a PCI device connected to the PCI bus 34, and in that connection can operate as a master device, to initiate transfers over the PCI bus 34, as well as a slave device in connection with transfers initiated over the PCI bus 34. In that connection, the PCI/workstation interface 22 effectively operates as an interface for a number of types of devices to the PCI bus 34, including the PC video memory 42 and IDE/EIDE devices over IDE/EIDE bus 41, which operate in a number of regions of the address space defined by the PCI bus 34. Thus, during the address/command phase of a transfer initiated by another device connected to the PCI bus 34, the PCI/workstation interface 22 needs to quickly determine whether it is to claim the transfer and become the slave device for the transfer, before the end of the claim time-out period used by devices which operate in the subtractive decoding mode. In an embodiment of the invention, the PC PCI bus interface 50 (FIG. 3) of the PC/workstation interface 22 is provided with a first level PCI bus input/output section 50(1), which handles operations in connection with the command/address phase of a transfer over the PCI bus 34 when the PCI bridge 37 or another PCI device is operating as PCI bus master, and which includes look-up table 70 which is used by an interface control 71 to determine, for each address in the address space provided over the PCI bus 34, whether or not the PC/workstation interface 22 is to claim the transaction. If the interface control 71 determines that the PCI/workstation interface 22 is to claim the transaction, it conditions appropriate signals over the PCI bus 34. In addition, the interface control 71 will, during subsequent phases of the PCI bus transaction, pass information received over the PCI bus 34 during those phases to a second level PCI input/output section 50(2). The second level PCI input/output section 50(2) uses the information received during the subsequent phases to control transfers with other components of the PCI/workstation interface 22 over the resource bus 53.

In one embodiment, the look-up table 70 is in the form of a bit map having a series of bits LUT(i) ("i" being an index) each associated with one of the addresses in the address space provided over the PCI bus 34. In that embodiment, for each address for which the PC/workstation interface 22 is to claim the transaction, the corresponding bit LUT(i) of the look-up table is set. On the other hand, the bits LUT(i) of the look-up table 70 that are associated with the addresses for which the PC/workstation 22 is not to claim the transaction are clear. When an address is received by the PC PCI bus interface 50 during the address/command phase of a transfer, the interface control 71 uses the address as an index "i" into the look-up table 70 to determine the condition of the bit LUT(i) associated with the received address, thereby to determine whether the PC/workstation interface 22 is to claim the transfer or not claim the transfer, that is, to ignore the transfer. If the bit LUT(i) of the look-up table 70 is set, indicating that the PC/workstation interface 22 is to claim the transfer, then the interface control 71 can then enable the PC PCI bus interface 50 to claim the transfer for the PCI/workstation interface 22 as described above. On the other hand, if the bit LUT(i) that is associated with the address is not set, indicating that the PC/workstation interface 22 is not to claim the transfer, then the interface control 71 can ignore the transfer and, if necessary perform other operations. It will be appreciated by those of skill in the art that the operation of determining the state of the bit LUT(i) in the look-up table 70 can be performed very rapidly, which, in turn, can enable the PC PCI bus interface 50 to determine whether it is to claim a transfer before the claim time-out period, used by devices which operate in the subtractive addressing mode, has elapsed.

The look-up table 70 has been described as comprising a bit map comprising a series of bits LUT(i). It will be appreciated, however, that such a look-up table 70 will need at least one bit for each address or block of addresses in the address space of the PCI bus 34 for which a device which operates in the subtractive addressing mode can claim a transaction. If the number of such addresses is large, the look-up table 70 can be correspondingly large. However, if the number of such addresses or address blocks for which the PC/workstation interface 22 would need to claim a transfer is small, only a small number of bits in the look-up table 70 will be set. In that case, instead of implementing the look-up table 70 as a bit map, it may be more efficient, in terms of storage space required for the look-up table 70, to provide, for example, a content addressable memory in which addresses in which the PCI/workstation interface 22 would need to claim a transfer would be stored. In that case, when the PC PCI bus interface 50 receives an address during the address/command phase, the content addressable memory would compare the received address to each of the addresses stored in the look-up table 70. If the received address corresponds to an address stored in the look-up table 70, the look-up table can generate an appropriate indication, in response to which the interface control 71 will enable the PC PCI bus interface 50 to claim the transfer. On the other hand, if the received address does not correspond to any of the addresses stored in the look-up table 70, the look-up table 70 will not generate the indication, and the interface control 71 will enable the PC PCI bus interface 50 to ignore the transfer.

It will be appreciated that, although use of a content addressable memory as the look-up table 70 may have the advantage of reducing the amount of storage space required for the look-up table 70, the number of storage locations provided for the content addressable memory will serve to limit the number of addresses in the address space of PCI bus 34 for which the PC PCI bus interface 50 will claim a transfer.

As described above, the microcontroller 62 receives commands provided by the workstation portion 20, the PC portion 21 and the video display control 54. The commands are loaded into in a command list 63, from which the microcontroller 62 retrieves the commands for processing. FIG. 4 depicts a functional block diagram of the command list 63, which is used in one embodiment of the invention. In accordance with a second aspect of the invention, the command list 63 actually comprises two command lists, or FIFOs, namely, a "normal" FIFO 80 and a priority FIFO 81. Each command is associated with two flags, namely, an "order" flag (not separately shown) and a "priority" flag (also not separately shown), which control the particular FIFO 80 or 81 into which the respective command is loaded and ordering of execution of commands by the microcontroller 62. The normal FIFO 80 buffers commands that are to be executed by the microcontroller 62 with a "normal" priority as indicated by the priority flag. The priority FIFO 81 buffers commands that are to be executed by the microcontroller 62 with an enhanced priority, as also indicated by the priority flag. Generally, if there are commands buffered in the pnority FIFO 81, the microcontroller 62 will retrieve commands therefrom and execute those commands prior to retrieving and executing commands from the normal FIFO 80.

The command list 63 further comprises an input selector 82 and a command FIFO output selection control 83. The input selector selectively couples commands "CMD_IN" which are receive from the command bus 66 to one or the other of the normal FIFO 80 or the priority FIFO 81 for storage. The input selector 82 operates in response to a PRI_SEL priority select signal from the command bus 66, which reflects the condition of the priority flag for the respective command being loaded into the command list 63. The PRI_SEL priority select signal is controlled by the device which provides the command to the command list 63 over the command bus 66, thereby allowing the device which provides the command to determine the priority with which the command is to be processed. The command FIFO output selection control 83 selectively retrieves commands from the FIFOs 80 and 81 for processing by the microcontroller 62. Normally, if there are no commands in the priority FIFO 81, the command FIFO output selection control 83 will retrieve commands from the normal FIFO 80 for processing by the microcontroller 62. On the other hand, if there are commands in the priority FIFO 81, the command FIFO output selection control 83 will normally retrieve commands from the priority FIFO for execution by the microcontroller 62, before returning to the normal FIFO 80.

It will be appreciated that, since there are two FIFOs 80 and 81 which can supply commands to the microcontroller 62, the commands can be executed out of the order in which they were provided to the command list 63. Such out-of-order execution is often satisfactory; however, in some circumstances, primarily with storage and retrieval commands in connection with the mass storage subsystem devices connected to the IDE/EIDE bus 41, the commands are preferably executed in the order in which they are provided by the respective workstation portion 20 or PC portion 21. This will ensure that, if, for example, the PC/workstation interface 22 receives a command from the PC portion 21 to store information in a mass storage subsystem device, the information will actually be stored in the device before it (that is, the PC/workstation interface 22) will receive and execute a retrieval command potentially for the same information. To accommodate in-order processing, if the order flag associated with a command is set, indicating that the command is to be executed before another command whose order flag is set will be loaded into the command list 63. Thus, if the storage and retrieval operations are associated with set order flags, this mechanism will ensure that the command list 63 will contain only one such command at a time, thereby ensuring that the commands (that is, commands associated with set order flags) will be executed in the order in which they are provided to the PC/interface 22. However, it will be appreciated that commands which are associated with clear order flags, and thus do not need to be executed in any particular order, may continue to be added to the command list 63 for execution by the microcontroller 62. In that connection, such commands (that is, commands which are associated with clear order flags) can be loaded into to the respective normal or priority FIFO 80 or 81, depending on the condition of their respective priority flags, and executed in normal or priority order.

The PC/workstation interface 22 provides a number of advantages. In particular, it provides an arrangement for connecting a PC portion 21 to a workstation 20 to form a computer system 10 which can execute both programs written for and designed for execution by the workstation 20, as well as programs written for and designed for execution by a PC, without requiring emulation of the PC programs by the workstation 20. Thus, the computer system 10 can execute the PC programs faster and more efficiently than if it were emulating the PC programs.

In addition, as described above, the mechanism provided by the look-up table 70 and interface control 71 of the PC PCI bus interface 50 allows the PC/workstation interface 22 to quickly determine whether it is the intended slave device in a transaction over the PCI bus 34 controlled by another device as master of the PCI bus 34, thereby to ensure that another device, operating in the subtractive decoding mode, will not erroneously claim the transaction. In addition, the priority flags associated with the respective commands and the associated normal and priority FIFOs 80 and 81, allow a particular source of commands to be executed by the microcontroller 62 to determine the priority with which the commands will be executed, and the order flags also associated with the respective commands, ensure that the commands will be executed in order, when necessary.

The PC/workstation interface 22 has been described above as including interfaces to IDE/EIDE devices, through IDE/EIDE bus interface 52, and a PC video memory 42, through video memory interface 56, and provides disk controller services in connection with disk storage devices connected to the IDE/EIDE bus 41 and a video controller services for the PC portion 21. It will be appreciated that the PC/workstation interface 22 may also include interfaces to other types of devices and provide corresponding services for such devices. For example, the PC/workstation interface 22 may include an SCSI (small computer systems interface) interface for interfacing to one or more SCSI devices, and in that connection will provide controller services for the particular SCSI devices connected thereto. Illustrative SCSI devices include, for example, mass storage devices in which-data is stored on disk- and tape-based magnetic storage media and scanning devices for scanning hardcopy images and converting them to digital form. Other types of SCSI devices will be known to those skilled in the art. In addition, although the PC operator input interface 51 has been described as providing operator input information from keyboard and mouse operator input devices 12A and 12B, it will be appreciated that the computer system 10 may comprise a number of other or additional types of operator input devices, and the PC operator input interface 51 may be connected to provide operator input information provided thereto by the workstation portion 20 to appropriate input elements in the PC portion 21 in a similar manner.

It will be appreciated that a system in accordance with the invention can be constructed in whole or in part from special purpose hardware or a general purpose computer system, or any combination thereof, any portion of which may be controlled by a suitable program. Any program may in whole or in part comprise part of or be stored on the system in a conventional manner, or it may in whole or in part be provided in to the system over a network or other mechanism for transferring information in a conventional manner. In addition, it will be appreciated that the system may be operated and/or otherwise controlled by means of information provided by an operator using operator input elements (not shown) which may be connected directly to the system or which may transfer the information to the system over a network or other mechanism for transferring information in a conventional manner.

The foregoing description has been limited to a specific embodiment of this invention. It will be apparent, however, that various variations and modifications may be made to the invention, with the attainment of some or all of the advantages of the invention. It is intended that these and such other variations and modifications fall within the scope of the invention.

## Claims

1. A device for use in connection with an information transfer system, the information transfer system including a plurality of other devices interconnected by a bus, the devices engaging in information transfer transactions including a first phase during which one of said devices, as a master device, transmits an address from an address space over said bus and another device, as a slave device, claims the transaction, and at least one subsequent phase in which information is transferred between the master and slave devices, said device including:
A. a lookup table identifying selected addresses in said address space; and
B. an interface control for responsive to receipt of an address to determine, from the lookup table, whether the received address is one of the addresses identified in the lookup table, and, if so, claiming the transaction and thereafter engaging in said transaction as a slave device with the master device.

2. A device as defined in claim 1 in which said lookup table is a bit map having a plurality of bits each associated with one of said addresses in the address space, the bits associated with the selected addresses being set.

3. A device as defined in claim 1 in which said lookup table is a content addressable memory listing ones of said addresses which comprise said selected addresses.

4. A device as defined in claim 1 in which said bus is a PCI bus.

5. A computer system comprising a personal computer ("PC") portion and a workstation portion interconnected by an interface, said PC portion having a bus, the interface connected to said bus, the PC portion having at least one other device connected to said bus, the devices engaging in information transfer transactions including a first phase during said at least one other device, as a master device, transmits an address from an address space over said bus and said interface, as a slave device, claims the transaction, and at least one subsequent phase in which information is transferred between the master and slave devices, said interface including:
A. a lookup table identifying selected addresses in said address space; and
B. an interface control for responsive to receipt of an address to determine, from the lookup table, whether the received address is one of the addresses identified in the lookup table, and, if so, claiming the transaction and thereafter engaging in said transaction as a slave device with the master device.

6. A computer system as defined in claim 5 in which said lookup table is a bit map having a plurality of bits each associated with one of said addresses in the address space, the bits associated with the selected addresses being set.

7. A computer system as defined in claim 5 in which said lookup table is a content addressable memory listing ones of said addresses which comprise said selected addresses.

8. A computer system as defined in claim 5 in which said bus is a PCI bus.

9. A computer system as defined in claim 5 in which said interface is connected to a mass storage subsystem, the at least one other device in at least one information transfer transaction transmitting an information storage command associated with an address in at least one portion of said address space, the lookup table identifying said address in said at least one portion of said address space so that, when the at least one other device initiates said at least one information transfer transaction, the interface control will claim the transaction thereby to enable information to be stored on said mass storage subsystem.

10. A computer system as defined in claim 9 in which said workstation portion further provides at least one information storage command to said interface, the interface being responsive to said at least one information storage command from said workstation portion to store information on said mass storage subsystem.

11. A computer system as defined in claim 5 in which said interface is connected to a mass storage subsystem, the at least one other device in at least one information transfer transaction transmitting an information retrieval command associated with an address in at least one portion of said address space, the lookup table identifying said address in said at least one portion of said address space so that, when the at least one other device initiates said at least one information transfer transaction, the interface control will claim the transaction thereby to enable information to be retrieved from said mass storage subsystem and transferred to said PC portion.

12. A computer system as defined in claim 9 in which said workstation portion further provides at least one information retrieval command to said interface, the interface being responsive to said at least one information retrieval command from said workstation portion to retrieve information from said mass storage subsystem for transfer to said workstation portion.

13. A computer system as defined in claim 5 in which said PC portion further includes an operator input interface for receiving operator input information, said interface being further connected to said operator input interface to provide said operator input information thereto.

14. A computer system as defined in claim 13 in which said interface receives the operator input information to be provided to the PC portion from said workstation portion.

15. A computer system as defined in claim 13 in which said interface includes a PC operator input interface connected to said PC portion's operator input interface, the interface further receiving information for controlling said PC operator input interface in a said transaction over said bus, the transaction being associated with a said address which the lookup table identifies as one of said selected addresses.

16. A computer system as defined in claim 5 in which said interface includes a video subsystem for said PC portion, the at least one other device in at least one information transfer transaction providing a video command associated with an address in at least one address in said address space, the lookup table identifying said address in said at least one portion of said address space so that, when the at least one other device initiates said at least one information transfer transaction, the interface control will claim the transaction thereby to enable the video command to be received and processed.

17. A computer system as defined in claim 16 in which said video subsystem is connected to a video memory for storing video information received by said interface from said PC portion.

18. A computer system as defined in claim 17 in which said interface further provides selected video information provided by said PC portion to said workstation portion

19. A computer system as defined in claim 18 in which said workstation portion displays said selected video information.

20. A computer system as defined in claim 17 in which said interface further receives video command information from said workstation portion, the interface using the video command information to determine the video information to be selected as the selected video information.

21. A device including a microcontroller for controlling selected operations in response to commands loaded in a command list, the command list having two first-in/first-out (FIFO) buffers including a FIFO buffer associated with a normal priority and a FIFO buffer associated with an enhanced priority, each commands being selectively loaded in one of said FIFO buffers, the microcontroller selecting ones of said commands for execution based on the respective priority associated with the FIFO buffer.

22. A device as defined in claim 21 in which each command is associated with a priority identifier, the command list using the priority in determining the particular FIFO buffer in which the respective command is to be loaded.

23. A device as defined in claim 23 in which each command is further associated with an order flag, the command list controlling the loading of commands in said command list in response to the order flags of commands previously-loaded in at least one of said buffers, thereby to ensure that at least some commands are executed in the order in which they are received.
